(19)

Europäisches
Patentamt
European
Patent Office
Office européen
des brevets

(11) **EP 3 002 731 A2**

(12) **EUROPEAN PATENT APPLICATION**

(43) Date of publication:
06.04.2016 Bulletin 2016/14

(51) Int Cl.:
*G06T 9/00* (2006.01)          *H04N 1/195* (2006.01)
*H04N 1/48* (2006.01)          *G06T 1/00* (2006.01)
*H04N 5/335* (2006.01)          *H04N 5/355* (2011.01)
*G06T 5/00* (2006.01)          *H04N 5/235* (2006.01)

(21) Application number: 15195980.6

(22) Date of filing: 23.12.2009

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(62) Document number(s) of the earlier application(s) in
accordance with Art. 76 EPC:
**09852485.3 / 2 517 179**

(71) Applicant: **Nokia Technologies Oy
02610 Espoo (FI)**

(72) Inventors:
• **Rissa, Tero
33450 Siivikkala (FI)**

• **Viikinkoski, Matti
33100 Tampere (FI)**
• **Mäki-Marttunen, Tuomo
33720 Tampere (FI)**

(74) Representative: **Tampereen Patenttitoimisto Oy
Visiokatu 1
33720 Tampere (FI)**

Remarks:
This application was filed on 24-11-2015 as a
divisional application to the application mentioned
under INID code 62.

(54) **DETERMING COLOR INFORMATION USING A BINARY SENSOR**

(57)     The invention relates to forming an image using binary pixels. Binary pixels are pixels that have only two states, a white state when the pixel is exposed and a black state when the pixel is not exposed. The binary pixels have color filters on top of them, and the setup of color filters may be unknown to some degree. Information about the color filters may be determined, and a setup making use of a statistical approach may be subsequently used to determine the color of incoming light to produce output images. Consequently, the approach may be used with the binary pixel array to produce images from the input images that the binary pixel array records.

Fig. 2b

EP 3 002 731 A2

## Description

<u>Background</u>

A binary image sensor may comprise e.g. more than $10^9$ individual light detectors arranged as a two-dimensional array. Each individual light detector has two possible states: an unexposed "black" state and an exposed "white" state. Thus, an individual detector does not reproduce different shades of grey. The local brightness of an image may be determined e.g. by the local spatial density of white pixels. The size of the individual light detectors of a binary image sensor may be smaller than the minimum size of a focal spot which can be provided by the imaging optics of a digital camera.

However, storing or transferring binary digital images as such may be difficult or impossible due to the large data size. The resulting image data may even be so large that storing and processing of the binary digital images becomes impractical in a digital camera, or even in a desktop computer.

There is, therefore, a need for a solution that improves the applicability of binary digital image sensors to practical solutions.

<u>Summary</u>

Now there has been invented an improved method and technical equipment implementing the method, by which the above problems are alleviated. Various aspects of the invention include a method, an apparatus, a server, a client and a computer readable medium comprising a computer program stored therein, which are characterized by what is stated in the independent claims. Various embodiments of the invention are disclosed in the dependent claims.

Binary pixels are pixels that have only two states, a white state when the pixel is exposed and a black state when the pixel is not exposed. The binary pixels have color filters on top of them, and the setup of color filters may be known to some degree. A setup making use of a statistical approach such as a maximum likelihood estimate may be used to determine the color of incoming light to produce output images. Consequently, the approach may be used with the binary pixel array to produce images from the input images that the binary pixel array records.

According to a first aspect there is provided a method for producing an output pixel value, comprising receiving binary pixel values, the binary pixel values having been formed with binary pixels with color filters by applying light, forming an estimate of a color of said light by using a group of said binary pixel values and optimizing an estimation function, and forming an output pixel value using said estimate.

According to an embodiment, the method further comprises exposing said binary pixels to light through color filters superimposed on said binary pixels, said light having passed through an optical arrangement, and forming said binary pixel values from the output of said binary pixels. According to an embodiment, the method further comprises forming said estimate using at least one of the group of likelihood estimation and least squares estimation, and refining said estimate iteratively. According to an embodiment, the method further comprises forming said estimation function using said binary pixel values and information on said color filters. According to an embodiment, the method further comprises forming an output image using a plurality of said output pixel values.

According to a second aspect there is provided an apparatus comprising at least one processor, memory including computer program code, the memory and the computer program code configured to, with the at least one processor, cause the apparatus to receive binary pixel values, the binary pixel values having been formed with binary pixels with color filters by applying light, form an estimate of a color of said light by using a group of said binary pixel values and optimizing an estimation function, and form an output pixel value using said estimate.

According to an embodiment, the apparatus further comprises computer program code configured to, with the processor, cause the apparatus to expose said binary pixels to light through color filters superimposed on said binary pixels, said light having passed through an optical arrangement, and form said binary pixel values from the output of said binary pixels. According to an embodiment, the apparatus further comprises computer program code configured to, with the processor, cause the apparatus to form said estimate using maximum at least one of the group of likelihood estimation and least squares estimation, and refine said estimate iteratively. According to an embodiment, the apparatus further comprises computer program code configured to, with the processor, cause the apparatus to form said estimation function using said binary pixel values and information on said color filters. According to an embodiment, the apparatus further comprises computer program code configured to, with the processor, cause the apparatus to form an output image using a plurality of said output pixel values. According to an embodiment, the apparatus further comprises an optical arrangement for forming an image, an array of binary pixels for detecting said image, and groups of said binary pixels. According to an embodiment, the apparatus further comprises at least one color filter superimposed on an array of binary pixels, said color filter being superimposed on said array of binary pixels in a manner that is at least one of the group of non-aligned, irregular, random, and unknown superimposition.

According to a third aspect there is provided a system comprising at least one processor, memory including computer program code, the memory and the computer program code configured to, with the at least one processor, cause the system to receive binary pixel values, the binary pixel values having been formed with binary pixels with color filters by applying light, form an estimate of a color of said light by using a group of said binary pixel values and optimizing an estimation function, and form an output pixel value using said estimate. According to an embodiment, the system comprises an image capture unit configured to form said binary pixel values, and comprising an optical arrangement for forming an image and an array of binary pixels for detecting said image and an image processing unit comprising an image processor configured to estimate the colors of said image by using a plurality of said binary pixel values and optimizing an estimation function.

According to a fourth aspect there is provided a computer program product stored on a computer readable medium and executable in a data processing device, wherein the computer program product comprises a computer program code section for receiving binary pixel values, the binary pixel values having been formed with binary pixels with color filters by applying light, a computer program code section for forming an estimate of a color of said light by using a group of said binary pixel values and optimizing an estimation function, and a computer program code section for forming an output pixel value using said estimate. According to an embodiment, the computer program product further comprises a computer program code section for forming an output image using a plurality of said output pixel values.

According to a fifth aspect there is provided an apparatus comprising processing means, memory means, means for receiving binary pixel values, the binary pixel values having been formed with binary pixels with color filters by applying light, means for forming an estimate of a color of said light by using a group of said binary pixel values and optimizing an estimation function, and means for forming an output pixel value using said estimate.

Description of the Drawings

In the following, various embodiments of the invention will be described in more detail with reference to the appended drawings, in which

Fig. 1a                    shows a binary image;

Fig. 1b                    shows a density of white pixels as a function of exposure;

Fig. 2a                    shows a grey-scale image of a girl;

Fig. 2b                    shows a binary image of a girl;

Fig. 3a                    shows probability of white state for a single pixel;

Fig. 3b                    shows dependence of white state probability on wavelength;

Fig. 4                     shows a Bayer matrix type color filter on top of a binary pixel array for capturing color information;

Fig. 5                     shows a random color filter on top of a binary pixel array for forming output pixels;

Fig. 6                     shows a block diagram of an imaging device;

Fig. 7                     shows a color signal unit for forming output pixels from binary pixels;

Fig. 8                     shows an arrangement for determining a color filter layout overlaying a binary pixel array;

Fig. 9                     shows an arrangement for determining color of incoming light with a color filter overlaying a binary pixel array;

Fig. 10                    illustrates the determination of color values of light by a statistical method.;

Fig. 11                    illustrates a likelihood function 1140 for a two-dimensional random variable;

Fig. 12a                   shows a color filter mosaic with piecewise constant color filter values;

Fig. 12b                   shows a color filter mosaic with smoothly changing color filter values;

Figs. 13a, 13b and 13c    illustrate the red $X_R$, green $X_G$ and blue $X_B$ components of example color filters

Fig. 14a                  shows an example exposure of a binary pixel array;

Fig. 14b                  shows an example color filter setup for a binary pixel array;

Fig. 14c                  shows an example exposure of a binary pixel array;

Fig. 15                   shows a method for determining color values of light by a statistical method; and

Fig. 16                   shows a method for determining color values of light by a statistical method.

Description of Example Embodiments

In the following, several embodiments of the invention will be described in the context of a binary pixel array. It is to be noted, however, that the invention is not limited to binary pixel arrays. In fact, the different example embodiments have applications widely in any environment where mapping of input pixel values to output pixel values through a partly uncertain process is exploited.

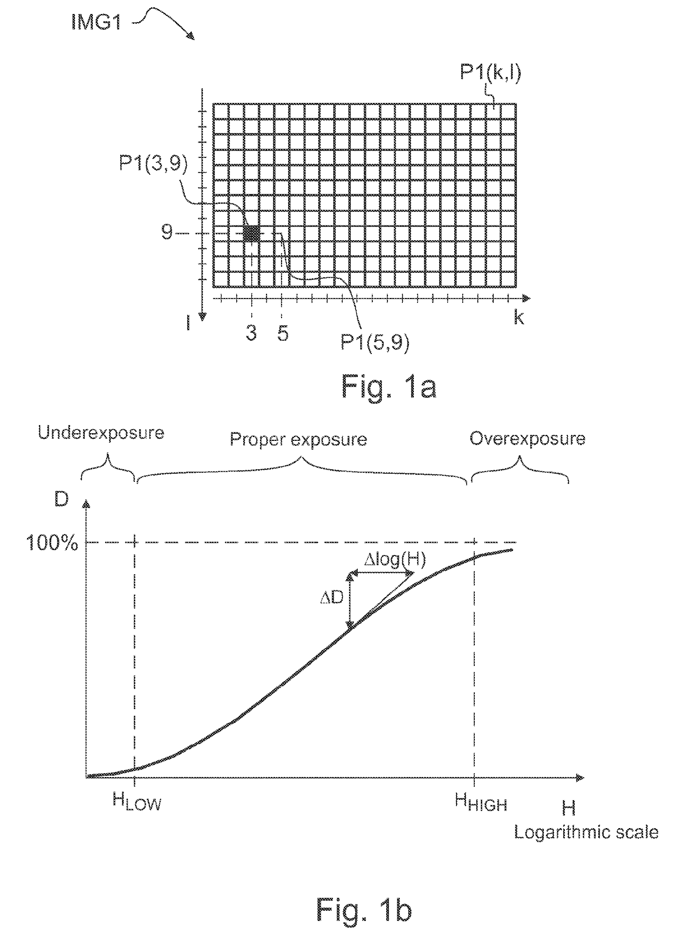

Referring to Fig. 1a, the image sensor applied in the example embodiments may be a binary image sensor arranged to provide a binary image IMG1. The image sensor may comprise a two-dimensional array of light detectors such that the output of each light detector has only two logical states. Said logical states are herein called as the "black" state and the "white" state. The image sensor may be initialized such that all detectors may be initially at the black state. An individual detector may be switched into the white state by exposing it to light. Thus, a binary image IMG1 provided by the image sensor may consist of pixels P1, which are either in the black state or in the white state, respectively. The expressions "white pixel" and "the pixel is white" refer to a pixel which is in the white state. The expression "black pixel" refers to a pixel which is in the black state, respectively. These expressions are not indicative of the color of the pixel, they merely describe whether the pixel has been activated (white state or "lit") due to light or whether it remains inactive (black state or "unlit").

The pixels P1 may be arranged in rows and columns, i.e. the position of each pixel P1 of an input image IMG1 may be defined by an index k of the respective column and the index I of the respective row. For example, the pixel P1(3,9) shown in Fig. 1a is black and the pixel P1 (5,9) is white.

A binary light detector may be implemented e.g. by providing a conventional (proportional) light detector which has a very high conversion gain (low capacitance). Other possible approaches include using avalanche or impact ionization to provide in-pixel gain, or the use of quantum dots.

Fig. 1b shows an estimate for the density D of white pixels P1 as a function of optical exposure H. The exposure H is presented in a logarithmic scale. The density D means the ratio of the number of white pixels P1 within a portion of the image IMG1 to the total number of pixels P1 within said portion. A density value 100% means that all pixels within the portion are in the white state. A density value 0% means that all pixels within the portion are in the black state. The optical exposure H is proportional to the optical intensity and the exposure time. The density D is 0% at zero exposure H. The density increases with increasing exposure until the density begins to saturate near the upper limit 100%.

The conversion of a predetermined pixel P1 from black to white is a stochastic phenomenon. The actual density of white pixels P1 within the portion of the image IMG1 follows the curve of Fig. 1b when said portion contains a high number of pixels P1.

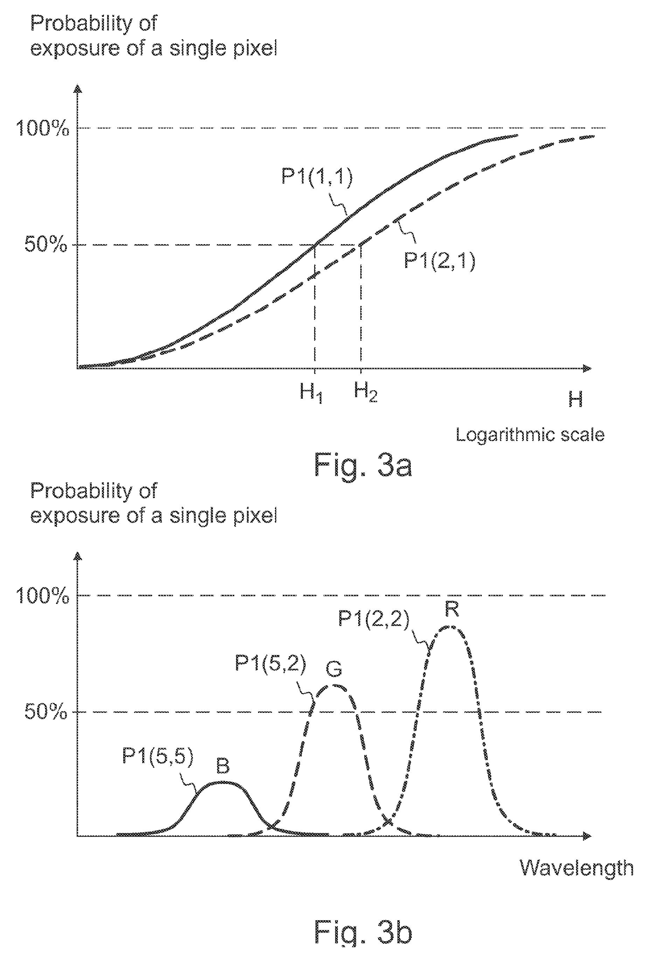

In case of individual pixels, the curve of Fig. 1b may also be interpreted to represent the probability for a situation where the state of a predetermined pixel P1 is converted from the black state to the white state after a predetermined optical exposure H (see also Figs 3a and 3b).

An input image IMG1 is properly exposed when the slope $\Delta D/\Delta \log(H)$ of the exposure curve is sufficiently high (greater than or equal to a predetermined value). Typically, this condition is attained when the exposure H is greater than or equal to a first predetermined limit HLOW and smaller than or equal to a second predetermined limit HHIGH. Consequently the input image may be underexposed when the exposure H is smaller than the first predetermined limit HLOW, and the input image may be overexposed when the exposure H is greater than the second predetermined limit HHIGH.

The signal-to-noise ratio of the input image IMG1 or the signal-to-noise ratio of a smaller portion of the input image IMG1 may be unacceptably low when the exposure H is smaller than the first limit HLOW or greater than the second limit HHIGH. In those cases it may be acceptable to reduce the effective spatial resolution in order to increase the signal-to-noise ratio.

The exposure state of a portion of a binary image depends on the density of white and/or black pixels within said portion. Thus, the exposure state of a portion of the input image IMG1 may be estimated e.g. based on the density of white pixels P1 within said portion. The density of white pixels in a portion of an image depends on the density of black pixels within said portion.

The exposure state of a portion of the input image IMG1 may also be determined e.g. by using a further input image IMG1 previously captured by the same image sensor. The exposure state of a portion of the input image IMG1 may also be estimated e.g. by using a further image captured by a further image sensor.

The further image sensor which can be used for determining the exposure state may also be an analog sensor. The analog image sensor comprises individual light detectors, which are arranged to provide different grey levels, in addition to the black and white color. Different portions of an image captured by an analog image sensor may also be determined to be underexposed, properly exposed, or overexposed. For example, when the brightness value of substantially all pixels in a portion of an image captured by an analog image sensor are greater than 90%, the image portion may be classified to be overexposed. For example, when the the brightness value of substantially all pixels in a portion of an image captured by an analog image sensor are smaller than 10%, the image portion may be classified to be underexposed. When a considerable fraction of pixels have brightness values in the range of 10% to 90%, then the image portion may be properly exposed, respectively.

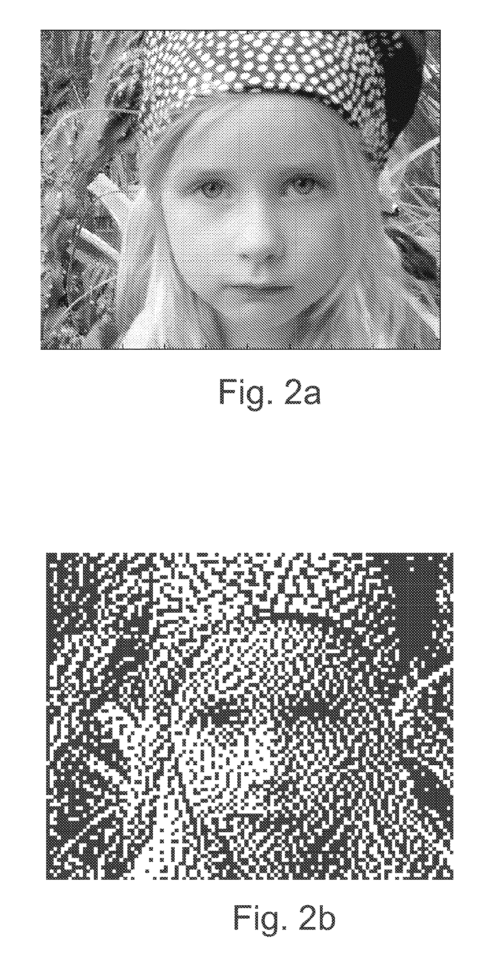

Fig 2a shows, by way of example, an image of a girl in grey scale. Fig. 2b shows a binary image corresponding to the image of Fig. 2a. The image of Fig. 2b has a large pixel size in order to emphasize the black and white pixel structure. In reality, binary pixels that make up the image of Fig. 2b are often smaller than the output pixels that make up the image of Fig. 2a. Several binary pixels of Fig.2b may correspond to one analog pixel of Fib. 2a. The density of binary pixels in the white state in Fig. 2b may have a correspondence to the grey scale brightness of an analog pixel in Fig. 2a.

Fig. 3a shows probability of exposure or state changing for a single binary pixel, i.e. the probability that the state of a single predetermined pixel is changed from the black state to the white state. In Fig. 1b, the density of white pixels compared to black pixels as a function of intensity H was shown. Correspondingly, with reference to Fig. 3a, a pixel has a probability of being in a white state, and this probability is a function of intensity. For example, the pixel P1(1,1) has a 50% probability of being in the white state when the optical exposure is $H_1$ and the pixel P1(2,1) has a 50% probability of being in the white state when the optical exposure is $H_2$. As mentioned above, the optical exposure H is proportional to the optical intensity and the exposure time. Different pixels may have different probability curves, i.e. they may have a different probability of being in the white state with the same intensity H of incoming light.

Fig. 3b shows state changing probability for a single binary pixel as a function of wavelength of light impinging on a combination of a color filter and the binary pixel. In Fig. 3b, it is assumed that various binary pixels may have a color filter imposed on top of them so that a certain color band of incoming light is able to pass trough. In such an arrangement, different binary pixels may have a different probability of being in the white state when they are exposed to light that has the same intensity but different wavelength (color).

For example, in Fig. 3b the pixel P1(5,5) is responsive to light that has a wavelength corresponding essentially to the blue color. When the wavelength of the incoming light deviates from the blue color, the pixel P1(5,5) has a lower probability of being in the exposed (white) state. Likewise, the pixel P1(5,2) is responsive to light that has a wavelength corresponding essentially to the green color, and the pixel P1(2,2) is responsive to light that has a wavelength corresponding essentially to the red color.

The color filters on top of the binary pixels may seek to act as band-pass filters whereby the underlying pixels are responsive only to light in a certain color band, e.g. red, green or blue or any other color or wavelength. However, the color filters may be imperfect either intentionally or by chance, and the band-pass filter may "leak" so that other colors are let through, as well.

The probability of a pixel being exposed as a function of wavelength may not be a regularly-shaped function like the bell-shaped functions in Fig. 3b for a blue pixel (solid line), green pixel (dashed line) and red pixel (dash-dot line). Indeed, the probability function may be irregular, it may have several maxima, and it may have a fat tail (i.e. a long tail which has a non-negligible magnitude) so that the probability of e.g. a red pixel being exposed with blue light is not essentially zero, but may be e.g. 3%, 10% or 30% or even more.

The state-changing probability functions of pixels of different color may be essentially non-overlapping, as in the case of Fig. 3b, so that light of single color has a probability of exposing pixels of essentially the same color, but not others. The state-changing probability functions may also be overlapping so that light between red and green wavelengths has a significant probability of exposing both red pixel P1(2,2) and green pixel P1(5,2). The state-changing probability functions may also vary from pixel to pixel.

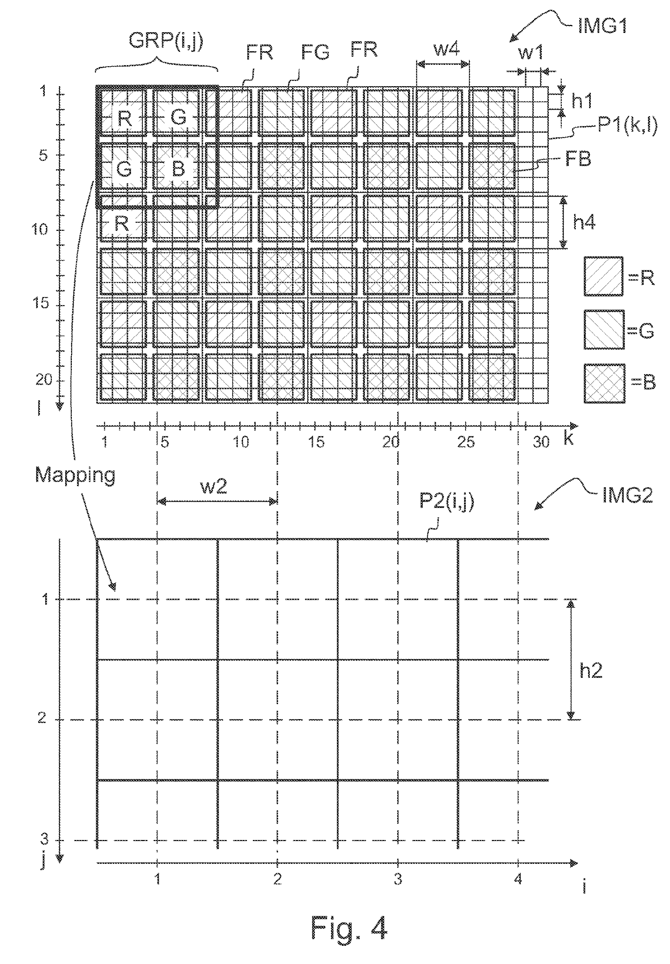

Fig. 4 shows a Bayer matrix type color filter on top of a binary pixel array for forming output pixels. The pixel coordinates of the binary pixels P1(k,l) in Fig. 4 correspond to Fig. 3b and create an input image IMG1. A Bayer matrix is an arrangement with color filters, which are placed on top of light sensors in a regular layout, where every second filter is green, and every second filter is red or blue in an alternating manner. Therefore, as shown in Fig. 4, essentially 50% of the filters are green (shown with downward diagonal texture), essentially 25% are red (shown with upward diagonal texture) and essentially 25% are blue (shown with cross pattern texture). In an setup where a Bayer matrix is placed on top of a binary pixel array, individual color filters FR, FG and FB may overlap a single binary pixel, or a plurality of binary pixels, for example 4 binary pixels, 9.5 binary pixels, 20.7 binary pixels, 100 binary pixels, 1000 binary pixels or even more. If the distance between the centers of the binary input pixels is w1 in width and h1 in height, the distance between centers of individual Bayer matrix filters may be w4 in width and h4 in height, whereby w4>w1 and h4>h1. Thus the filters may overlap several binary pixels. The individual filters may be tightly spaced, they may have a gap in between (leaving an area in between that lets through all colors) or they may overlap each other. The filters may be square-shaped, rectangular, hexagonal or any other shape.

The binary pixels of image IMG1 may form groups GRP(i,j) corresponding to pixels P2(i,j) of the output image IMG2. In this manner, a mapping between the binary input image IMG1 and the output image IMG2 may be formed. The groups GRP(i,j) may comprise binary pixels that have color filters of different colors. The groups may be of the same size, or they may be of different sizes. The groups may be shaped regularly or they may have an irregular shape. The groups may overlap each other, they may be adjacent to each other or they may have gaps in between groups. In Fig. 4, as an example, the group GRP(1,1) corresponding to pixel P2(1,1) of image IMG2 overlaps 64 (8x8) binary pixels of image IMG1, that is, group GRP(1,1) comprises the pixels P1(1,1)-P1(8,8). The boundaries of the groups GRP(I,j) may coincide with boundaries of the color filters FR, FG, FB, but this is not necessary. The group boundaries may also be displaced and/or misaligned with respect to the boundaries of the Bayer matrix filters. In this manner, the groups GRP(i,j) of image IMG1 may be used to form pixels P2(i,j) in image IMG2. The distance between the centers of the pixels P2(i,j) may be w2 in width and h2 in heightThe output pixels P2 may have a size of w2 and h2, respectively, or they may be smaller or larger.

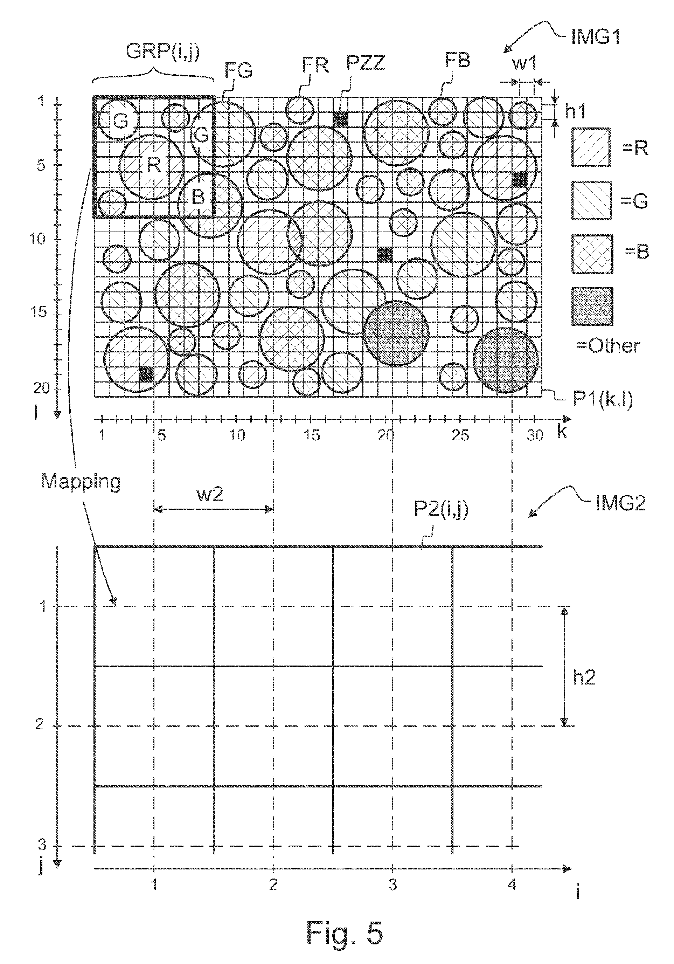

Fig. 5 shows a random color filter on top of a binary pixel array for forming output pixels. As with Fig. 4, the image IMG1 comprises binary pixels P1(k,l) that may be grouped to groups GRP(i,j), the groups corresponding to pixels P2(i,j) in image IMG2, and the setup of the images IMG1 and IMG2 are the same as in Fig. 4. However, in contrast to Fig. 4, the color filters FG, FR and FB of Fig. 5 are not regularly shaped or arranged in a regular arrangement. The color filters may have different sizes, and may be placed on top of the binary pixels in a random manner. The color filters may be spaced apart from each other, they may be adjacent to each other or they may overlap each other. The color filters may leave space in between the color filters that lets through all colors or wavelengths of light, or alternatively, does not essentially let through light at all. Some of the pixels P1(k,l) may be non-functioning pixels PZZ that are permanently jammed to the white (exposed) state, or the black (unexposed) state, or that otherwise give out an erroneous signal that is not well dependent on the incoming intensity of light. The pixels P1(k,l) may have different probability functions for being in the white state as a function of intensity of incoming light. The pixels P1(k,l) may have different probability functions for being in the white state as a function of wavelength of incoming light. These properties may be due to imperfections of the pixels themselves or imperfections of the overlaying color filters. For example, the color filters may have a color Other different from red, green and blue.

With an arrangement like shown in Fig. 5, a group GRP(i,j) may comprise a varying number of binary pixels that have a green G filter, a red R filter or a blue B filter. Furthermore, the different red, green and blue binary pixels may be placed differently in different groups GRP(i,j). The average number of red, green and blue pixels and pixels without a filter may be essentially the same across the groups GRP(i,j), or the average number (density) of red, green and blue pixels and pixels without a filter may vary across groups GRP(i,j) according to a known or unknown distribution.

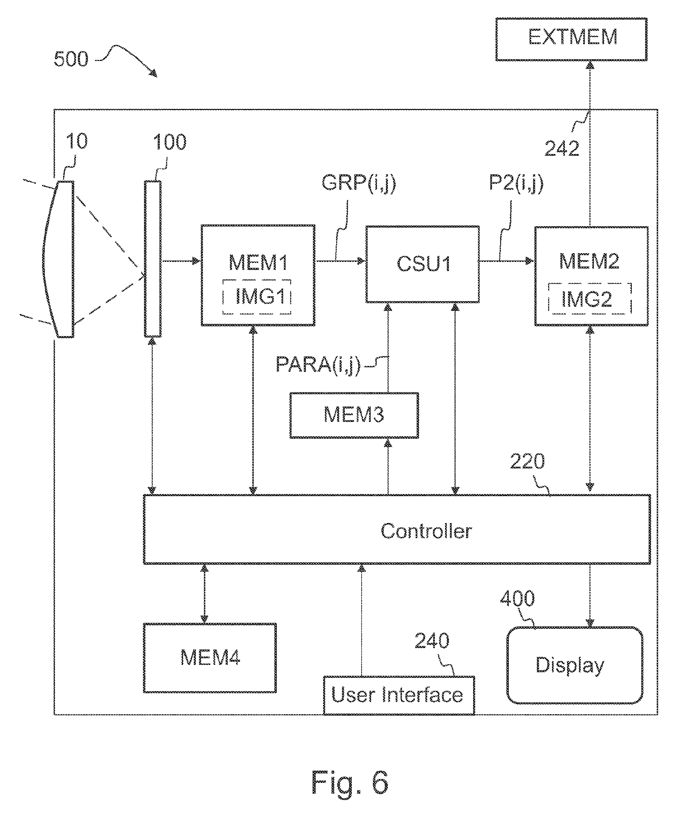

Fig. 6 shows a block diagram of an imaging device. Referring to Fig. 6, an imaging device 500 may comprise imaging optics 10 and an image sensor 100 for capturing a binary digital input image IMG1 of an object, and a signal processing unit (i.e. a Color Signal Unit) CSU1 arranged to provide an output image IMG2 based on an input image IMG1. The imaging optics 10 may be e.g. a focusing lens. The input image IMG1 may depict an object, e.g. a landscape, a human face, or an animal. The output image IMG2 may depict the same object but at a lower spatial resolution or pixel density.

The image sensor 100 may be binary image sensor comprising a two-dimensional array of light detectors. The detectors may be arranged e.g. in more than 10000 columns and in more than 10000 rows. The image sensor 100 may comprise e.g. more than $10^9$ individual light detectors. An input image IMG1 captured by the image sensor 100 may comprise pixels arranged e.g. in 41472 columns and 31104 rows. (image data size $1.3 \cdot 10^9$ bits, i.e. 1.3 gigabits or 160 megabytes). The corresponding output image IMG2 may have a lower resolution. For example, the corresponding output image IMG2 may comprise pixels arranged e.g. in 2592 columns and 1944 rows (image data size of approximately $5 \cdot 10^6$ pixels, 8 bits per pixel for each color R,G,B, total data size $1.2 \cdot 10^8$ bits, i.e. approximately 120 megabits or 15 megabytes). Thus, the image size may be reduced e.g. by a factor of 10 (=$1.3 \cdot 10^9/1.2 \cdot 10^8$).

The data size of a binary input image IMG1 may be e.g. greater than or equal to 4 times the data size of a corresponding output image IMG2, wherein the data sizes may be indicated e.g. in the total number of bits needed to describe the image information. If higher data reduction is needed, the data size of the input image IMG1 may be greater than 10, greater than 20, greater than 50 times or even greater than 100 or 1000 times the data size of a corresponding output image IMG2.

The imaging device 500 may comprise an input memory MEM1, an output memory MEM2 to store output images IMG2, a memory MEM3 for storing data related to image processing such as neural network coefficients or weights or other data, an operational memory MEM4 for example to store computer program code for the data processing algorithms and other programs and data, a display 400, a controller 220 to control the operation of the imaging device 500, and an user interface 240 to receive commands from a user.

The input memory MEM1 may at least temporarily store at least a few rows or columns of the pixels P1 of the input image IMG1. Thus, the input memory may be arranged to store at least a part of the input image IMG1, or it may be arranged to store the whole input image IMG1. The input memory MEM1 may be arranged to reside in the same module as the image sensor 100, for example so that each pixel of the image sensor may have one, two or more memory locations operatively connected to the image sensor pixels for storing the data recorded by the image sensor.

The signal processor CSU1 may be arranged to process the pixel values IMG1 captured by the image sensor 100. The processing may happen e.g. using a neural network or other means, and coefficients or weights from memory MEM3 may be used in processing. The signal processor CSU1 may store its output data, e.g. an output image IMG2 to MEM2 or to MEM3 (not shown in picture). The signal processor CSU1 may function independently or it may be controlled by the controller 220, e.g. a general purpose processor. Output image data may be transmitted from the signal processing unit 200 and/or from the output memory MEM2 to an external memory EXTMEM via a data bus 242. The information may be sent e.g. via internet and/or via a mobile telephone network.

The memories MEM1, MEM2, MEM3, and/or MEM4 may be physically located in the same memory unit. For example, the memories MEM1, MEM1, MEM2, MEM3, and/or MEM4 may be allocated memory areas in the same component. The memories MEM1, MEM2, MEM3, MEM4, and/or MEM5 may also be physically located in connection with the respective processing unit, e.g. so that memory MEM1 is located in connection with the image sensor 100, memory MEM3 is located in connection with the signal processor CSU1, and memories MEM3 and MEM4 are located in connection with the controller 220.

The imaging device 500 may further comprise a display 400 for displaying the output images IMG2. Also the input images IMG1 may be displayed. However, as the size of the input image IMG1 may be very large, it may be so that only a small portion of the input image IMG1 can be displayed at a time at full resolution. The user of the imaging device 500 may use the interface 240 e.g. for selecting an image capturing mode, exposure time, optical zoom (i.e. optical magnification), digital zoom (i.e. cropping of digital image), and/or resolution of an output image IMG2.

The imaging device 500 may be any device with an image sensor, for example a digital still image or video camera, a portable or fixed electronic device like a mobile phone, a laptop computer or a desktop computer, a video camera, a television or a screen, a microscope, a telescope, a car or a, motorbike, a plane, a helicopter, a satellite, a ship or an implant like an eye implant. The imaging device 500 may also be a module for use in any of the above mentioned apparatuses, whereby the imaging device 500 is operatively connected to the apparatus e.g. by means of a wired or wireless connection, or an optical connection, in a fixed or detachable manner.

The device 500 may also omit having an image sensor. It may be feasible to store outputs of binary pixels from another device, and merely process the binary image IMG1 in the device 500. For example, a digital camera may store the binary pixels in raw format for later processing. The raw format image IMG1 may then be processed in device 500 immediately or at a later time. The device 500 may therefore be any device that has means for processing the binary image IMG1. For example, the device 500 may be a mobile phone, a laptop computer or a desktop computer, a video camera, a television or a screen, a microscope, a telescope, a car or a motorbike, a plane, a helicopter, a satellite, a ship, or an implant like an eye implant. The device 500 may also be a module for use in any of the above mentioned apparatuses, whereby the imaging device 500 is operatively connected to the apparatus e.g. by means of a wired or wireless connection, or an optical connection, in a fixed or detachable manner. The device 500 may be implemented as a computer program product that comprises computer program code for determining the output image from the raw image. The device 500 may also be implemented as a service, wherein the various parts and the processing capabilities reside in a network. The service may be able to process raw or binary images IMG1 to form output images IMG2 to the user of the service. The processing may also be distributed among several devices.

The control unit 220 may be arranged to control the operation of the imaging device 500. The control unit 220 may be arranged to send signals to the image sensor 100 e.g. in order to set the exposure time, in order to start an exposure, and/or in order to reset the pixels of the image sensor 100.

The control unit 220 may be arranged to send signals to the imaging optics 10 e.g. for performing focusing, for optical zooming, and/or for adjusting optical aperture.

Thanks to image processing according to the present invention, the output memory MEM2 and/or the external memory EXTMEM may store a greater number of output images IMG2 than without said image processing. Alternatively or in addition, the size of the memory MEM2 and/or EXTMEM may be smaller than without said image processing. Also the data transmission rate via the data bus 242 may be lowered. These advantages may be achieved without visible loss in image resolution due to the processing in the signal processor CSU1.

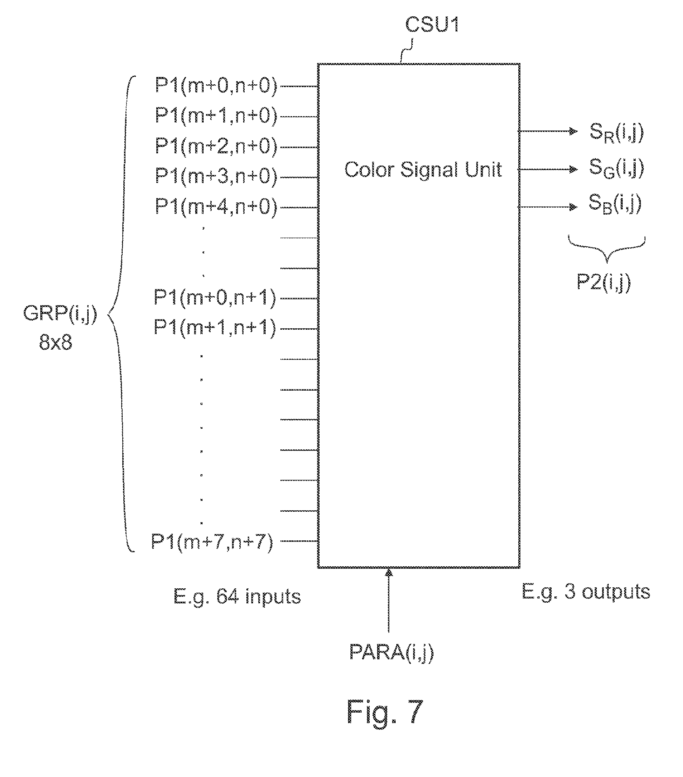

Fig. 7 shows a color signal unit CSU1 for forming output pixels from binary pixels. The color signal unit or signal processor CSU1 may have a large number of inputs, e.g. 16, 35, 47, 64, 280, 1400, 4096, 10000 or more, corresponding to pixels P1 in the input image IMG1. For example, the inputs may correspond to the binary pixels of groups GRP(i,j) and be binary values from pixels P1(m+0,n+0) to P1(m+7,n+7), the binary values indicating whether the corresponding pixel has been exposed or not (being in the white or black state, correspondingly). In Fig. 7, the indices m and n may specify the coordinates of the upper left corner of an input pixel group GRP(i,j), which is fed to the inputs of the color signal unit CSU1. For example, when processing the group GRP(1,1), in order to calculate the color values for the output pixel P2(1,1), the values (i.e. states) of the input pixels P1(1,1), P1(2,1), P1(3,1)...P1(6,8), P1(7,8), and P1(8,8) may be fed to 64 different inputs of the color signal unit CSU1.

The color signal unit or signal processor CSU1 may take other data as input, for example data PARA(i,j) related to processing of the group GRP(i,j) or general data related to processing of all or some groups. It may use these data PARA by combining these data to the input values P1, or the data PARA may be used to control the operational parameters of the color signal unit CSU1. The color signal unit may have e.g. 3 outputs or any other number of outputs. The color values of an output pixel P2(i,j) may be specified by determining e.g. three different output signals $S_R(i,j)$ for the red color component, $S_G(i,j)$ for the green color component, and $S_B(i,j)$ for the blue color component. The outputs may correspond to output pixels P2(i,j), for example, the outputs may be the color values red, green and blue of the output pixel. The color signal unit CSU1 may correspond to one output pixel, or a larger number of output pixels.

The color signal unit CSU1 may also provide output signals, which correspond to a different color system than the RGB-system. For example, the output signals may specify color values for a CMYK-system (Cyan, Magenta, Yellow, Key color), or YUV-system (luma, 1st chrominance, 2nd chrominance). The output signals and the color filters may correspond to the same color system or a different color systems. Thus, the color signal unit CSU1 may also comprise a calculation module for providing conversion from a first color system to a second color system. For example, the image sensor 100 may be covered with red, green and blue filters (RGB system), but the color signal unit CSU1 may provide three output signals according to the YUV-system.

The color signal unit CSU1 may provide two, three, four, or more different color signals for each output pixel P2.

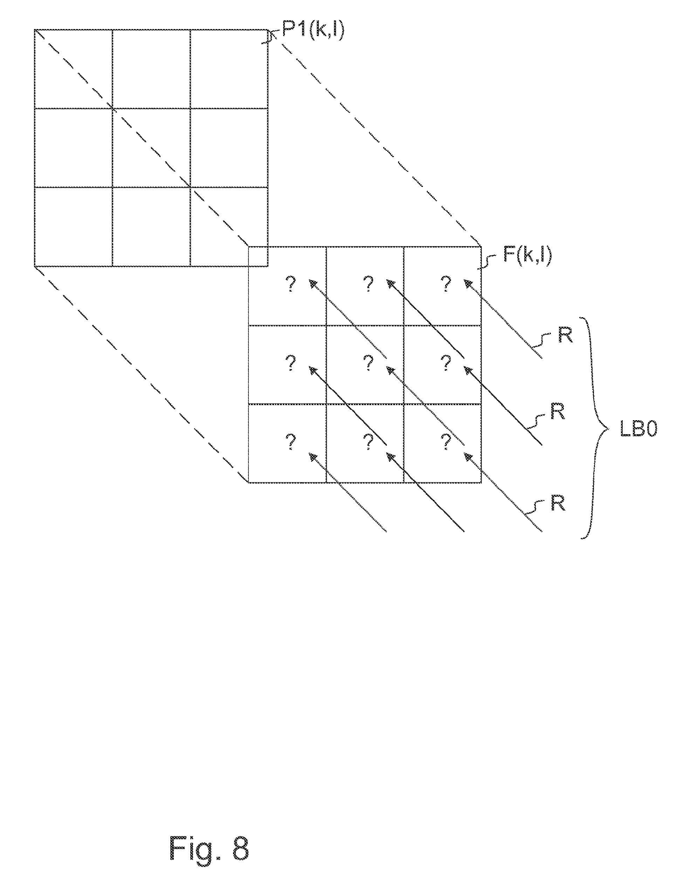

Fig. 8 shows an arrangement for determining a color filter layout overlaying a binary pixel array. The probability of changing state for the binary pixels P1(k,l) may be a function of the intensity of incoming light, as explained earlier in the context of Figs. 3a and 3b. Further, the binary pixels P1(k,l) may have a color filter F(k,l) on top of the binary pixel, as explained in the context of Figs. 4 and 5. Due to the irregular shape and size of the color filters and/or due to unknown alignment of the color filter array with the binary pixel array, the color of the filter F(k,l) (or colors of the filters) on top of the binary pixel P1(k,l) may not be known. The unknown color filter values have been marked with question marks in Fig. 8.

For example, after the color filter array has been manufactured on top of the binary pixel array, it may not be immediately known which Bayer matrix element overlays on top of which binary pixel (as in Fig. 4), or which color filter is on top of which binary pixel in an irregular setup (as in Fig. 5). The color filter array may also be irregular with respect to its colors, i.e. the colors of the filter elements may not be exactly of the color as intended. It might also be possible that the location and the color of the filters may also change over time, e.g. due to mechanical or physical wearing or due to exposure to light.

To determine color values for the color filters F(k,l), a light beam LB0 of known color or a known input image may be applied to the binary pixel array through the color filter array. The output of the binary pixels, i.e. the response of the binary pixels to the known input, may then be used to determine information of the color filter array. For example, pixel array may be exposed several times to different color of input light beams LB0 or different input images. The outputs of the binary pixels may be recorded and processed. For example, the binary pixels P1(k,l) may be grouped to groups GRP(i,j), as explained in the context of Figs. 4 and 5, and the information of each group GRP(i,j) may be processed separately. This will be explained later.

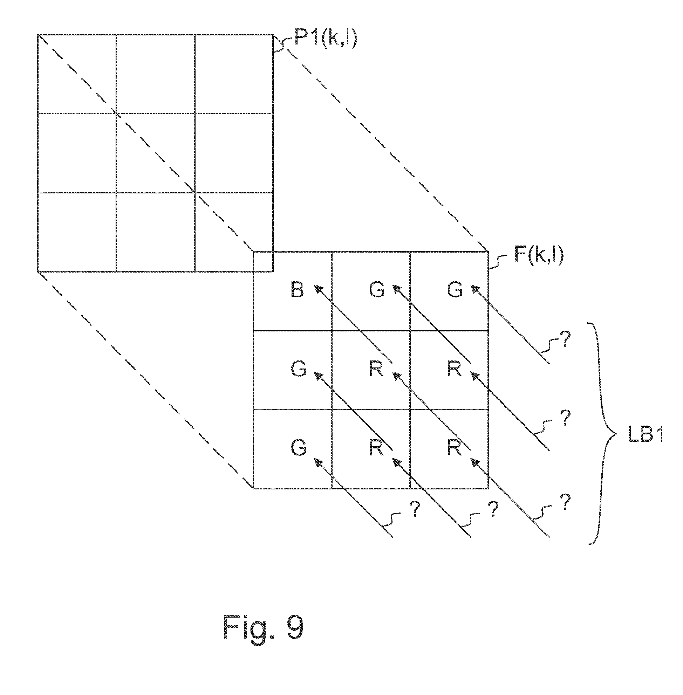

Fig. 9 shows an arrangement for determining color of incoming light with a color filter overlaying a binary pixel array. At this point, there exists some information about the color filters F(k,l), for example, the individual color filters may be knows, or the number of different color filters red, green and blue related to the groups GRP(i,j) of binary pixels may be known. It may also be that only a transformation from the binary pixel array P1(k,l) to the output pixel array P2(i,j) is known or at least partially known. This information of the color filter array F(k,l) may comprise information on the colors of the filters, information on non-functioning pixels, and/or information on pixels that do not have an associated color filter.

The information on the color filters F(k,l) may now be used to determine information of incoming light LB1. For example, the incoming light may be formed by a lens system, and may therefore form an image on the image sensor 100. When the incoming light passes through the color filters F(k,l) to the binary pixel array P1(k,l), it causes some of the binary pixels to be exposed (to be in the white state). Because the light LB1 has passed through a colour filter, the image IMG1 formed by the exposed binary pixels has information both on the intensity of light as well as the color of light LB1 hitting each binary pixel. When the image IMG1 is transformed into image IMG2 by using the information about the color filters F(k,l), for example by grouping the binary pixels to groups GRP(i,j) for forming the pixels P2(i,j) of the image IMG2, the color information may be decoded from the light LB1, and the each pixel of image IMG2 may be assigned a set of brightness values, one brightness value for each color component R, G, B.

In other words, a picture created by the camera optics onto the binary pixel array having superimposed color filters may cause the binary pixels to activate based on the color of light hitting the pixel and the color of the filter F(k,l) on top of the pixel. For example, when blue light hits a blue color filter F(k,l), the intensity of the light may not be diminished very much when it passes through the filter. Therefore, the binary pixel underneath the blue filter may have a high probability of being in the white state (being exposed). On the other hand, when blue light hits a red color filter F(k,l), the intensity of the light may be diminished to a greater degree. Therefore the binary pixel underneath the red filter may have a low probability of being in the white state (being exposed). Consequently, when a larger group of binary pixels GRP(i,j) is exposed to a certain color of light, say blue, more binary pixels having the corresponding color filter (e.g. blue) will be activated to the white state compared to those that have a color filter of another color (red and green). This exposure values (white/black) of the individual binary pixels may be used by a color signal unit CSU1 to form an output image IMG2.

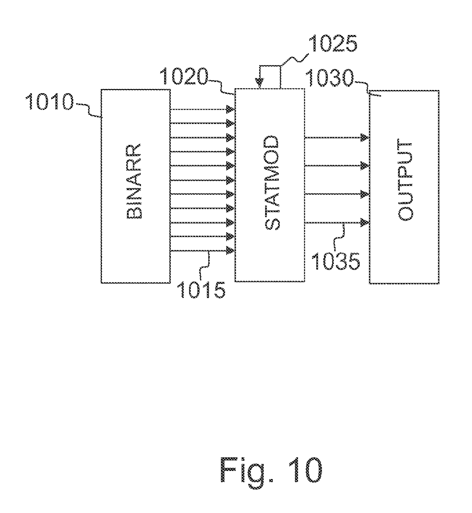

Fig. 10 illustrates the determination of color values of light by a statistical method. In the system, there may have a two-dimensional array BINARR 1010 of binary valued sensors, and on the binary sensors a color filter is superposed. The spectral response of each filter is assumed to be fixed, and known to at least some degree. The color filters may have been determined by using a neural network, or by a statistical method such as a maximum likelihood estimate using known input data like different colors of light.

When the binary pixel array BINARR 1010 is exposed to light, it produces an output signal 1015 from the binary pixels, which may be fed to the statistical module STATMOD 1020. The statistical module may then be operated so that the output of BINARR is used to compute values of output pixels 1035. This computation may happen sequentially 1025 for each output pixel P2 or in parallel so that input pixel values for multiple output pixels P2 are used in module STATMOD 1020 simultaneously. The statistical module may have e.g. 16 - 128, 64 - 400, 180 - 1000, 500 - 90 000, 10 000 - 1 million or 1 - 10 billion inputs or more. An output module OUTPUT 1030 may then output pixels P2 or form an image using the pixels P2.

The statistical module may be formed electronically for example using analog or digital electronics, and the electronics may comprise memory either externally to the module or embedded to the neural network. The statistical module may be formed by means of computer program code. The statistical module may also be formed optically by means of optical components suitable for optical computing.

In a Bayesian framework, both estimated and measured variables are considered as random variables. Assume X is a random variable that we want to estimate based on a measured variable Y of which a measurement y is obtained. The probability distribution of X is called a prior distribution, as it describes our knowledge of the variable before the measurement is made. The conditional probability density function $L(x) = P(Y=y|X=x)$ is called the likelihood function - it describes how likely a value x is for variable X, given a measured value y. The conditional probability density function $P(X=x|Y=y)$ is called the posterior distribution as it describes our knowledge of the variable X after the measurement.

Different estimators of X may be used depending on the amount of information that we have of the probability distributions. If no measurement is made, the estimator X may be based solely on the prior distribution of X. If a measurement or several measurements are made but no prior information on X is available, the estimator may be based on likelihood function $L(x)$ - for this, a maximum likelihood (ML) estimator can be used. If both prior and measurement data are available, estimators based on posterior distribution can be used, such as the maximum-a-posteriori (MAP) estimator and the posterior mean. The maximum likelihood estimate for the color of light hitting the position ij is the mode of the likelihood function, i.e. the values that make the measured data most likely.

The color of an incoming ray of light may be considered as a random variable, thus in a case of N times N binary array, there are $N^2$ random variables (each having e.g. 3 or 4 color components). We enumerate the random variables as $X_{ij}$, where i and j are between 1 and N (inclusive). We may assume that the binary sensors are small, and that the size binary sensor array is comparable or less than that of Airy disk caused by the diffraction of light. Thus it may be reasonable to model the photon distribution on sensor array as a homogenous spatial Poisson process.

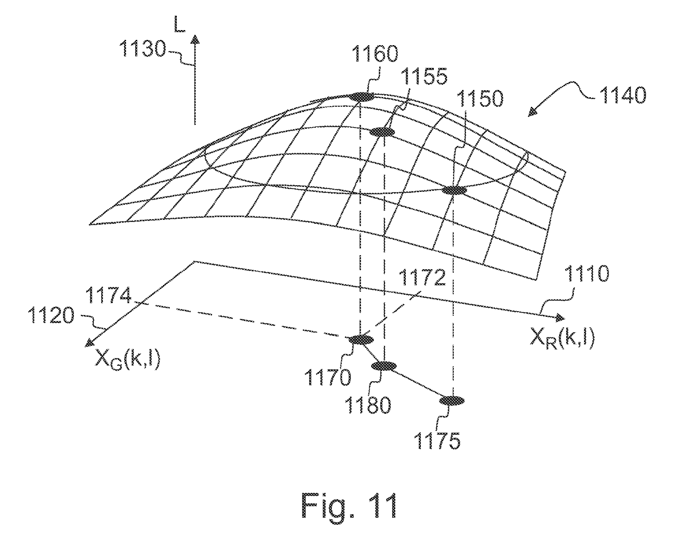

Fig. 11 illustrates a likelihood function 1140 for a two-dimensional random variable as an example. Let the dimensions of the random variable be R 1110 and G 1120, and thus the random variable X may take values (r,g), where for example r and g are between 0 and 1, inclusive. The likelihood L 1130 in this example case is a function that has one local and global maximum 1160 at point 1170 so that the G-value of X may be $x_G$ and the R-value of X may be $x_R$. When the likelihood is being maximized iteratively, the variable X may have an initial value 1175 so that the likelihood takes a value 1150. After one iteration, the value of X is 1180 and the likelihood takes the value 1155. Finally, when iteration has been finished, the variable X has reached the maximum likelihood estimate 1170 and the likelihood L reaches the maximum value 1160.

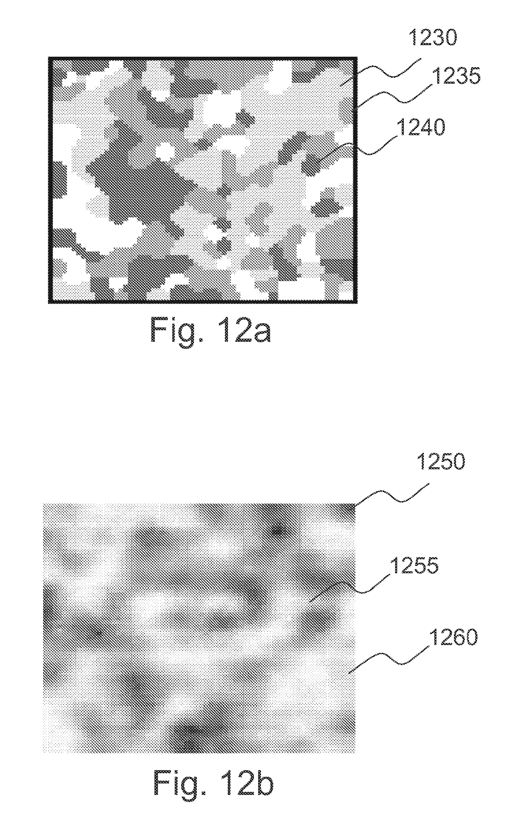

Fig. 12a shows a color filter mosaic with piecewise constant color filter values. As an example, we may consider a case where three different filter colors 1230, 1235 and 1240 form piecewise constant regions. In the figure, the regions have irregular shapes. The regions may also have regular shapes, or partly irregular shapes. The area covered by the color filters 1230, 1235 and 1240 may be the same, or it may differ. The color filters may be, for example, red, green and blue filters. The area of the green filter may be larger than the area of the red and blue filters, for example, the green filter area may be equal to the area of the red and blue filter together. There may be more than three filter colors on the pixels, as well, for example, four, five, six, ten, or a hundred. There may also be only two filter colors. The filter colors may have been determined e.g. by a neural network or by statistical methods.

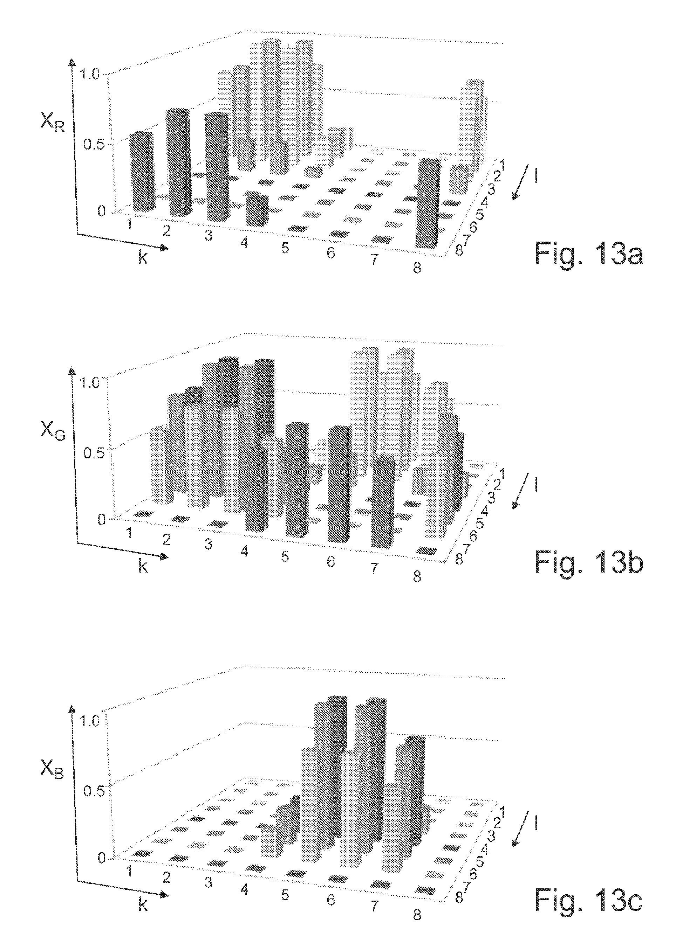

Fig. 12b shows a color filter mosaic with smoothly changing color filter values with three different components 1250, 1255 and 1260. (The grayscale image does not accurately reproduce the colors, and reference for further definition is made to Figs. 13a-13c). An individual color filter may have a mix of two or more colors, and the transmittance (lightness) of the filter for a single color may be partial, not only zero or full. Again, the filter colors may have been determined e.g. by a neural network or by statistical methods.

Figs. 13a, 13b and 13c illustrate the red $X_R$, green $X_G$ and blue $X_B$ components of example color filters. The color filter values may range from 0 to 1 for a color filter, where 0 means that the filter does not let light of that color pass, and 1 means that the filter lets light of that color pass fully. In Fig 13a, color filters on pixels in the corner where k,l<4 are essentially red, with differing transmittances for red light. In Fig. 13b, color filters where l=8 and 3<k<8 are essentially green, and have a high transmittance for green light. Finally, in Fig. 13c, color filters where 3<k,l<8 are essentially blue, and have a varying transmittance to blue light. For example, the color filter k=4,l=7 has transmittance for both the blue and the green color, so there may also be filters that pass light of multiple colors. This may be due to e.g. two filters being adjacent to each other on top of the pixel, or due to overlapping filters.

The type of color filter superposed on each binary sensor may be known, or sufficient information of the color filters may otherwise be available. Color values of light may be determined from the output matrix of the binary sensor array. For each filter type present in the sensor array, the number of lit and unlit sensors may be counted. This may allow us to write a likelihood function for the color values, given the sensor information. The maximum likelihood estimate for the color values may be obtained by maximizing the likelihood function.

We may now assume that the color characteristics of color filters are known. Our task is to determine the RGB-values of light, given the exposed binary sensor array. We assume that for each color R, G and B, there are $N_Y$ sensors, of which $N^l_Y$ are lit, $Y \in \{R,G,B\}$. Now $N_R + N_G + N_B = N^2$. The likelihood function for color intensity $\lambda_Y$ is

$$L\big(\lambda_Y \big| N_Y, N_Y^l\big) = \big(1 - e^{-\lambda_Y/N^2}\big)^{N_Y^l} \big(e^{-\lambda_Y/N^2}\big)^{N_Y - N_Y^l}.$$

In this case the maximum likelihood estimate for the RGB-values $\lambda_R$, $\lambda_G$, $\lambda_B$ given the sensor output can be found as follows: We want to find a value of $\lambda_Y$ that maximizes the likelihood function. The maximum value is found by differentiating the equation with respect to $\lambda_Y$ and setting the result equal to zero:

$$N_Y^l\big(-e^{-\lambda_Y/N^2}\big) - \big(N_Y - N_Y^l\big)\big(1 - e^{-\lambda_Y/N^2}\big) = 0.$$

From this equation $\lambda_Y$ can be easily solved:

$$\lambda_Y = -N^2 \log\Big(1 - \frac{N_Y^l}{N_Y}\Big),$$

where $Y \in \{R,G,B\}$.

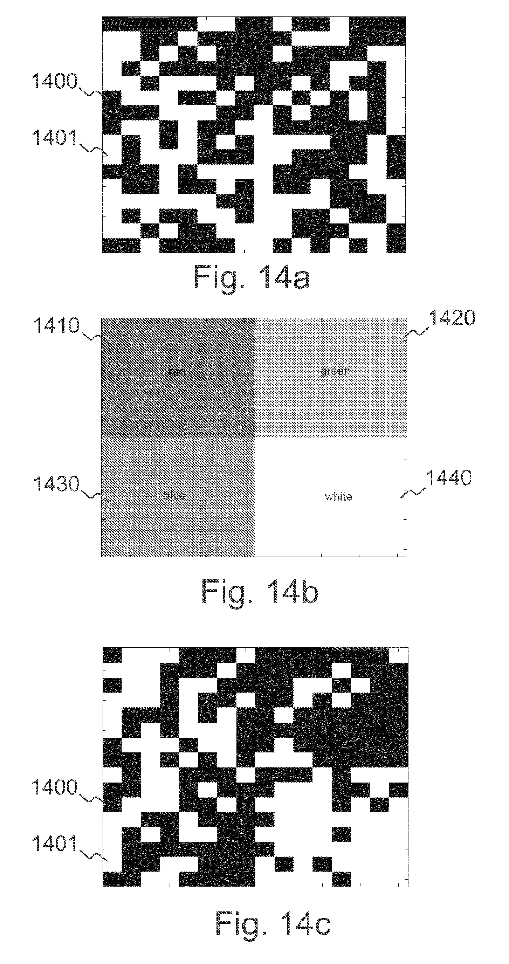

For example, assume that sensors are lit as in Fig. 14a, where white squares 1401 correspond to lit sensors and black squares 1400 to unlit sensors. Now, the exposure pattern may have been produced by a binary sensor array with N=16 having a Bayer filter, i.e. upper left and lower right quarter are green, upper right quarter is red and lower left quarter is blue. It needs to be appreciated that the filter may not be, and does not need to be, regular, but can be of any regular or irregular filter as presented earlier.

With the above example setting, there are a total of 256 binary sensors of which 64 are under a red filter, 64 under a blue filter and 128 under a green filter. Thus $N_R = N_B = 64$ and $N_G = 128$. From Fig. 14a we count the number of lit sensors: $N^l_G = 32 + 28 = 60$, $N^l_R = 24$ and $N^l_B = 32$. These values may be substituted to the likelihood equation to get:

$$\lambda_R \quad = -256 \cdot \log\big(1 - \tfrac{24}{64}\big) = 120.3$$

$$\lambda_G \quad = -256 \cdot \log(1 - \tfrac{60}{128}) = 161.9$$

$$\lambda_B \quad = -256 \cdot \log(1 - \tfrac{32}{64}) = 177.4.$$

From this we see that the estimated number of red, green and blue photon photons that hit the sensor array are 120.3, 161.9 and 177.4 respectively.

We may also have $n_f$ filter types whose spectral outputs differ from one another. For simplicity, instead of modeling the filter output for each wavelength, a filter type may be determined by a triple $(X_R, X_G, X_B) \in [0,1]^3$ that stands for the probability of a red, green and a blue photon passing the filter. We may have information which one of the $n_f$ filters lies in front of each binary sensor. For each filter type $Y = 1, \dots , n_f$ there are $N_Y$ sensors with filter Y in front and that $N^l_Y$ of them were lit during the exposure to light.

Consider the intensities of red, green and blue light, denoted as $\lambda = (\lambda_R, \lambda_G, \lambda_B)$. The number of red, green and blue photons arriving to the area of a single sensor may then be Poisson distributed with parameters $\lambda_R/N^2$, $\lambda_G/N^2$ and $\lambda_B/N^2$ respectively. But only a fraction of these photons may pass the filter in front of the sensor, thus the number of red, green and blue photons reaching the sensor may be Poisson distributed with parameters $\lambda_R X_R/N^2$, $\lambda_G X_G/N^2$ and $\lambda_B X_B/N^2$ respectively. Now the probability of the sensor remaining unlit by e.g. red photons may be $e^{-\lambda_R X_R/N^2}$.

The events of a sensor of type Y being activated by light of different colors (red, green and blue) may be independent of each other, hence the probability of the sensor remaining unlit may be

$$\alpha_Y = e^{-\lambda_R X_R^Y/N^2} e^{-\lambda_G X_G^Y/N^2} e^{-\lambda_B X_B^Y/N^2} = e^{-(\lambda_R X_R^Y + \lambda_G X_G^Y + \lambda_B X_B^Y)/N^2},$$

where $X_R^Y$, $X_G^Y$ and $X_B^Y$ may be the output probabilities of the filter type Y. Now the opposite probability (the probability of a sensor of type Y being lit) is $1 - \alpha_Y$.

This experiment for a single sensor of type Y may be seen as a Bernoulli trial and repeating the experiment $N_Y$ times gives us that the number of lit sensors of type Y (conditioned on intensities) may be binomially distributed:

$$N_Y^l | \lambda \sim Bin(N_Y, 1 - \alpha_Y).$$

These random variables $N_1^l | \lambda, \dots, N_{n_f}^l | \lambda$ are independent of each other. Hence the likelihood of the red, green and blue intensities may be the product of conditional probabilities:

$$
\begin{aligned}
L(\lambda) \quad = \quad & \binom{N_1}{N_1^l} \left(1 - e^{-(\lambda_R X_R^1 + \lambda_G X_G^1 + \lambda_B X_B^1)/N^2}\right)^{N_1^l} \\
& \cdot \left(e^{-(\lambda_R X_R^1 + \lambda_G X_G^1 + \lambda_B X_B^1)/N^2}\right)^{N_1 - N_1^l} \\
& \cdot \binom{N_2}{N_2^l} \left(1 - e^{-(\lambda_R X_R^2 + \lambda_G X_G^2 + \lambda_B X_B^2)/N^2}\right)^{N_2^l} \\
& \cdot \left(e^{-(\lambda_R X_R^2 + \lambda_G X_G^2 + \lambda_B X_B^2)/N^2}\right)^{N_2 - N_2^l} \cdot \dots \\
& \cdot \binom{N_{n_f}}{N_{n_f}^l} \left(1 - e^{-(\lambda_R X_R^{n_f} + \lambda_G X_G^{n_f} + \lambda_B X_B^{n_f})/N^2}\right)^{N_{n_f}^l} \\
& \cdot \left(e^{-(\lambda_R X_R^{n_f} + \lambda_G X_G^{n_f} + \lambda_B X_B^{n_f})/N^2}\right)^{N_{n_f} - N_{n_f}^l}.
\end{aligned}
$$

The maximum likelihood (ML) estimate for the 3-dimensional intensity $\lambda$ may be obtained by optimizing or

minimizing -log(L($\lambda$) using a minimization method. The function L may be written as

$$
\begin{aligned}
-\log(L(\lambda)) = \ & -N_1^l \log(1 - e^{-(\lambda_R X_R^1 + \lambda_G X_G^1 + \lambda_B X_B^1)/N^2}) \\
& + (N_1 - N_1^l)(\lambda_R X_R^1 + \lambda_G X_G^1 + \lambda_B X_B^1)/N^2) \\
& - N_2^l \log(1 - e^{-(\lambda_R X_R^2 + \lambda_G X_G^2 + \lambda_B X_B^2)/N^2}) \\
& + (N_2 - N_2^l)(\lambda_R X_R^2 + \lambda_G X_G^2 + \lambda_B X_B^2)/N^2) + \ldots \\
& - N_{n_f}^l \log(1 - e^{-(\lambda_R X_R^{n_f} + \lambda_G X_G^{n_f} + \lambda_B X_B^{n_f})/N^2}) \\
& + (N_{n_f} - N_{n_f}^l)(\lambda_R X_R^{n_f} + \lambda_G X_G^{n_f} + \lambda_B X_B^{n_f})/N^2) + C,
\end{aligned}
$$

where C is a constant independent of $\lambda$.

If prior knowledge of the intensity is available it may be used to construct the posterior distribution

$$
P(\lambda | N_1^l, \ldots, N_{n_f}^l) \propto P(\lambda) L(\lambda),
$$

where P($\lambda$) is the prior distribution of the intensity. For example, the intensity of the light may be limited or set in between certain values, i.e. even if all pixels are lit, the intensity is limited by setting the estimate in these cases to a predetermined maximum value, say LAMBDAMAX. This may corresponds to using a uniform distribution between [0,LAMBDAMAX] as the prior distribution for the intensity and solving the maximum-a-posteriori estimate.

An estimate for the intensity may be obtained by maximizing the posterior density function (maximum a posterior estimate) or by approximating the posterior mean. For the first the same minimization methods may be used as in obtaining the maximum likelihood estimate, and for the latter various non-linear Kalman and particle filters may be used.

Let us consider another example. Suppose that we have a 16 x 16 sensor array that corresponds to an output pixel P2 in a camera, and suppose that the filters are quartered to a RGBW (red-green-blue-white) matrix as in Fig. 14b. In Fig. 14b, the upper left area 1410 is a red filter, the upper right area 1420 is a green filter, the lower left area 1430 is a blue filter and the lower right area 1440 is a white filter. It needs to be appreciated that the filter may not be, and does not need to be, regular, but can be of any regular or irregular filter as presented earlier. In the example, the filters are assumed to be non-ideal in a way that the red filter lets 90% of the red photons pass and 10% of the green and blue photons pass, and likewise the green and blue filters let 90% of photons of their own color pass and 10% of the other photons. The white filter lets 90% of photons of all colors pass. Thus, the filters 1, 2, 3 and 4 (1=red, 2=green, 3=blue, 4=white) may be specified by $(X_R^1, X_G^1, X_B^1) = (0.9, 0.1, 0.1)$, $(X_R^2 X_G^2, X_B^2) = (0.1, 0.9, 0.1)$, $(X_R^3, X_G^3, X_B^3) = (0.1, 0.1, 0.9)$ and $(X_R^4, X_G^4, X_B^4) = (0.9, 0.9, 0.9)$.

When the sensor array is exposed to light a matrix M as in Fig. 14c may be obtained as an output of the binary sensors. In the figure, white squares correspond to lit sensors, black squares to unlit sensors. The color of the light (and the color of the output pixel P2) may be determined as follows: First, the number of lit sensors for each filter type is counted. We get $N_1^l = 33$, $N_2^l = 12$, $N_3^l = 24$ and $N_4^l = 48$. The total number of sensors may be equal for all filter types: $N_1 = N_2 = N_3 = N_4 = 64$. Next, we may find the maximum likelihood estimate by numerically minimizing the function -log(L($\lambda$)), which may be written as (the addition of the constant is neglected as it will not affect the result of the minimization or optimization):

$$
\begin{aligned}
-\log(L(\lambda)) = \ & -33 \log(1 - e^{-(0.9\lambda_R + 0.1\lambda_G + 0.1\lambda_B)/256}) + 31(0.9\lambda_R + 0.1\lambda_G + 0.1\lambda_B)/256 \\
& -12 \log(1 - e^{-(0.1\lambda_R + 0.9\lambda_G + 0.1\lambda_B)/256}) + 52(0.1\lambda_R + 0.9\lambda_G + 0.1\lambda_B)/256 \\
& -24 \log(1 - e^{-(0.1\lambda_R + 0.1\lambda_G + 0.9\lambda_B)/256}) + 40(0.1\lambda_R + 0.1\lambda_G + 0.9\lambda_B)/256 \\
& -48 \log(1 - e^{-(0.9\lambda_R + 0.9\lambda_G + 0.9\lambda_B)/256}) + 16(0.9\lambda_R + 0.9\lambda_G + 0.9\lambda_B)/256.
\end{aligned}
$$

Here, a minimization routine may be used with a starting point of e.g. $\lambda_0 = (50,50,50)$. An estimate $\lambda = (206,27,117)$ may then be obtained after a number of iterations.

In the above consideration, it needs to be appreciated that minimizing or maximizing a function can be understood to correspond to optimizing a function and that changing a sign or otherwise transforming the function may not have an effect on the end result.

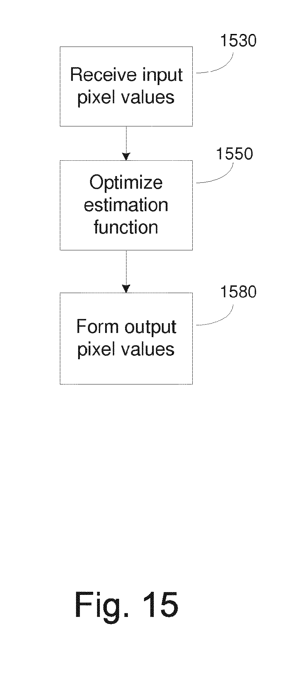

Fig. 15 shows a method for determining color values of light by a statistical method. In 1530, pixel values P1 from a binary pixel array are received. These pixel values P1 may have been formed so that light has passed through an optical arrangement for example so that it forms an image on the array. When light arrives onto the array, it may pass through a color filter on top of a binary pixel. The color of the color filter determines whether the light will be stopped by the color filter or whether it will pass through and may activate the pixel P1. In 1550, an estimate for the color of light is formed and optimized. The input pixel values may be used in forming this estimate. As described earlier, the estimate may be formed by forming a likelihood function for the color of light, and then optimizing the likelihood function. Other methods forming an estimate may be also be used. In 1580, an output pixel value P2 may be formed, for example by using a maximum likelihood estimate from 1550.

The binary pixels having associated color filters may have been exposed to a picture formed by the optics, and the binary pixels may produce a set of input pixel values. Knowing the values of the color filters, the input pixel values P1 of image IMG1 may be applied to the color signal unit CSU1 to compute the output pixel values P2. The output pixel values may then be used to compose an output image IMG2, for example by arranging the pixels into the image e.g. in rectangular shape. It needs to be appreciated, as explained earlier, that the values of binary pixels formed by the optics and image sensors may have been captured earlier, and in this method they may merely be input to the image processing system. It also needs to be appreciated that it may be sufficient to produce output pixels from the image processing system, and forming the output image IMG2 may not be needed.

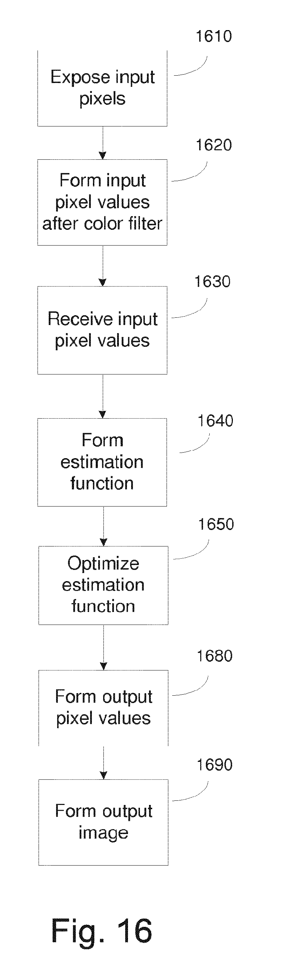

Fig. 16 shows a method for determining color values of light by a statistical method. In 1610, the binary pixels having associated color filters may be exposed to a picture formed by the optics of the imaging device. In 1620, the binary pixels may produce a set of input pixel values. This may happen so that the color filters determine whether a ray of light passes through to a binary pixel, and the binary pixel may then activate in a statistical manner, as explained earlier. The binary pixel may also activate deterministically so that if a photon hits the pixel, it activates.

In 1630, binary pixel values P1 from a binary pixel array are received. These pixel values P1 may have been formed so that light has passed through an optical arrangement for example so that it forms an image on the array. When light arrives onto the array, it may pass through a color filter on top of a binary pixel. The color of the color filter determines whether the light will be stopped by the color filter or whether it will pass through and may activate the pixel P1. The binary pixel values may be a string of bits, or the pixel values may be compressed. The received binary pixel values may be stored to a memory.

In 1640, an estimation function for determining the output pixel values may be formed. The data produced by the binary pixel array may be used in determining the estimation function, as well as the values of the color filters for the binary pixel array. For example, a likelihood function may be formed using the binary pixel values and the color filter values, as explained earlier. A group GRP of binary pixel values and the corresponding color filter values may be used in determining the likelihood function.

In 1650, an estimation function for the color of light is optimized. For example, a maximum of a likelihood function may be determined by iterative methods. In 1680, an output pixel values P2 may be formed, for example by using a maximum likelihood estimate from 1650. The output pixel values may correspond to groups GRP of input pixel values P1, as explained earlier.

The binary pixels having associated color filters may have been exposed to a picture formed by the optics, and the binary pixels may produce a set of input pixel values. Knowing the values of the color filters, the input pixel values P1 of image IMG1 may be applied to the color signal unit CSU1 to compute the output pixel values P2.

In 1690, the output pixel values may then be used to compose an output image IMG2, for example by arranging the pixels into the image in rectangular shape. It needs to be appreciated, as explained earlier, that the values of binary pixels formed by the optics and image sensors may have been captured earlier, and in this method they may merely be input to the image processing system. It also needs to be appreciated that it may be sufficient to produce output pixels from the image processing system, and forming the output image IMG2 may not be needed.

The exposure of the binary pixels may also be carried out separately, and the values of the binary pixels associated with each exposure may be recorded. Then, instead of exposing the binary pixels, the values of the binary pixels method may be sent to the statistical unit separately. The statistical unit may have or have access to information on the color filter values. In fact, the exposure of the binary pixels may happen in a completely separate device, e.g. a camera, and the forming of the output image may happen in another device having an appropriate setup for applying the statistical computations. This may be done, for example, to be able to compute the colors of the output pixels faster.

The various embodiments of the invention may be implemented with the help of computer program code that resides in a memory and causes the relevant apparatuses to carry out the invention. For example, a device may comprise circuitry and electronics for handling, receiving and transmitting data, computer program code in a memory, and a processor that, when running the computer program code, causes the device to carry out the features of an embodiment.

The various embodiments of the invention may be illustrated e.g. by the following examples:

Example 1. A method for producing an output pixel value, comprising:

- receiving binary pixel values, the binary pixel values having been formed with binary pixels with color filters by applying light,

- forming an estimate of a color of said light by using a group of said binary pixel values and optimizing an estimation function, and
- forming an output pixel value using said estimate.

Example 2. A method according to example 1, further comprising:

- exposing said binary pixels to light through color filters superimposed on said binary pixels, said light having passed through an optical arrangement, and
- forming said binary pixel values from the output of said binary pixels.

Example 3. A method according to example 1 or 2, further comprising:

- forming said estimate using at least one of the group of likelihood estimation and least squares estimation, and
- refining said estimate iteratively.

Example 4. A method according to example 1, 2 or 3, further comprising:

- forming said estimation function using said binary pixel values and information on said color filters.

Example 5. A method according to any of the examples 1 to 4, further comprising:

- forming an output image using a plurality of said output pixel values.

Example 6. An apparatus comprising at least one processor, memory including computer program code, the memory and the computer program code configured to, with the at least one processor, cause the apparatus to perform at least the following:

- receive binary pixel values, the binary pixel values having been formed with binary pixels with color filters by applying light,
- form an estimate of a color of said light by using a group of said binary pixel values and optimizing an estimation function, and
- form an output pixel value using said estimate.

Example 7. An apparatus according to example 6, further comprising computer program code configured to, with the processor, cause the apparatus to perform at least the following:

- expose said binary pixels to light through color filters superimposed on said binary pixels, said light having passed through an optical arrangement, and
- form said binary pixel values from the output of said binary pixels.

Example 8. An apparatus according to example 6 or 7, further comprising computer program code configured to, with the processor, cause the apparatus to perform at least the following:

- form said estimate using maximum at least one of the group of likelihood estimation and least squares estimation, and
- refine said estimate iteratively.

Example 9. An apparatus according to example 6, 7 or 8, further comprising computer program code configured to, with the processor, cause the apparatus to perform at least the following:

- form said estimation function using said binary pixel values and information on said color filters.

Example 10. An apparatus according to any of the examples 6 to 9, further comprising computer program code configured to, with the processor, cause the apparatus to perform at least the following:

- form an output image using a plurality of said output pixel values.

Example 11. An apparatus according to any of the examples 6 to 10, further comprising:

- an optical arrangement for forming an image,
- an array of binary pixels for detecting said image, and
- groups of said binary pixels.

Example 12. An apparatus according to any of the examples 6 to 11, further comprising:

- at least one color filter superimposed on an array of binary pixels, said color filter being superimposed on said array of binary pixels in a manner that is at least one of the group of non-aligned, irregular, random, and unknown superimposition.

Example 13. A system comprising at least one processor, memory including computer program code, the memory and the computer program code configured to, with the at least one processor, cause the system to perform at least the following:

- receive binary pixel values, the binary pixel values having been formed with binary pixels with color filters by applying light,
- form an estimate of a color of said light by using a group of said binary pixel values and optimizing an estimation function, and
- form an output pixel value using said estimate.

Example 14. A system according to example 13, wherein the system comprises

- an image capture unit configured to form said binary pixel values, and comprising an optical arrangement for forming an image and an array of binary pixels for detecting said image and
- an image processing unit comprising an image processor configured to estimate the colors of said image by using a plurality of said binary pixel values and optimizing an estimation function.

Example 15. A computer program product stored on a computer readable medium and executable in a data processing device, wherein the computer program product comprises:

- a computer program code section for receiving binary pixel values, the binary pixel values having been formed with binary pixels with color filters by applying light,
- a computer program code section for forming an estimate of a color of said light by using a group of said binary pixel values and optimizing an estimation function, and
- a computer program code section for forming an output pixel value using said estimate.

Example 16. A computer program product according to example 15, wherein the computer program product further comprises:

- a computer program code section for forming an output image using a plurality of said output pixel values.

Example 17. An apparatus comprising:

- processing means,
- memory means,
- means for receiving binary pixel values, the binary pixel values having been formed with binary pixels with color filters by applying light,
- means for forming an estimate of a color of said light by using a group of said binary pixel values and optimizing an estimation function, and
- means for forming an output pixel value using said estimate.

It is clear that the present invention is not limited solely to the above-presented embodiments, but it can be modified within the scope of the appended claims.

**Claims**

1. A method for producing an output pixel value, comprising:

   - obtaining output of binary pixels by applying a known input to an array of binary pixels through color filters,
   - determining information on the color filters by using the output of the binary pixels,
   - receiving binary pixel values, the binary pixel values having been formed with binary pixels with the color filter array by applying light,
   - forming an estimation function using said binary pixel values and the information on the color filters,
   - forming an estimate of a color of said light by using a group of said binary pixel values and optimizing the estimation function, and
   - forming an output pixel value using said estimate.

2. A method according to claim 1, wherein at least one of said color filters is superimposed on said array of binary pixels in a manner that is at least one of the group of non-aligned, irregular, random, and unknown superimposition.

3. A method according to claim 1 or 2, wherein determining said information on the color filters comprises exposing said array of binary pixels several times to different color of light beams applied through said color filters.

4. A method according to claim 1, 2 or 3, wherein determining said information on the color filters comprises likelihood estimation.

5. A method according to any of the claims 1 to 4, further comprising:

   - exposing said binary pixels to light through the color filters superimposed on said binary pixels, said light having passed through an optical arrangement, and
   - forming said binary pixel values from an output of said binary pixels.

6. A method according to any of the claims 1 to 5, further comprising:

   - forming said estimate using at least one of the group of likelihood estimation and least squares estimation, and
   - refining said estimate iteratively.

7. A method according to any of the claims 1 to 6, wherein the information on said color filters comprises information on the colors of the filters, information on non-functioning pixels, and/or information on pixels that do not have an associated color filter.

8. A method according to any of the claims 1 to 7, further comprising:

   - forming an output image using a plurality of said output pixel values.

9. An apparatus comprising at least one processor, memory including computer program code, the memory and the computer program code configured to, with the at least one processor, cause the apparatus to perform at least the following:

   - receive output of binary pixels obtained by applying a known input to an array of binary pixels through color filters,
   - determine information on the color filters by using the output of the binary pixels,
   - form an estimation function using said binary pixel values and the information on the color filters,
   - receive binary pixel values, the binary pixel values having been formed with binary pixels with color filters by applying light,
   - form an estimate of a color of said light by using a group of said binary pixel values and optimizing the estimation function, and
   - form an output pixel value using said estimate.

10. An apparatus according to claim 9, further comprising computer program code configured to, with the processor, cause the apparatus to perform at least the following:

    - expose said binary pixels to light through color filters superimposed on said binary pixels, said light having passed through an optical arrangement, and
- form said binary pixel values from an output of said binary pixels.

11. An apparatus according to claim 9 or 10, further comprising computer program code configured to, with the processor, cause the apparatus to perform at least the following:

- form said estimate using maximum at least one of the group of likelihood estimation and least squares estimation, and
- refine said estimate iteratively.

12. An apparatus according to claim 9, 10 or 11, further comprising computer program code configured to, with the processor, cause the apparatus to perform at least the following:

- form said estimation function using said binary pixel values and the information on said color filters such that the information on said color filters comprises information on the colors of the filters, information on non-functioning pixels, and/or information on pixels that do not have an associated color filter.

13. An apparatus according to any of the claims 9 to 12, further comprising:

- an optical arrangement for forming an image,
- an array of binary pixels for detecting said image, and
- groups of said binary pixels.

14. An apparatus according to any of the claims 9 to 13, further comprising:

- at least one color filter superimposed on an array of binary pixels, said color filter being superimposed on said array of binary pixels in a manner that is at least one of the group of non-aligned, irregular, random, and unknown superimposition.

15. A computer program product stored on a computer readable medium and executable in a data processing device, wherein the computer program product comprises:

- a computer program code section for receiving output of binary pixels obtained by applying a known input to an array of binary pixels through color filters,
- a computer program code section for determining information on the color filters by using the output of the binary pixels,
- a computer program code section for forming an estimation function using said binary pixel values and the information on the color filters,
- a computer program code section for receiving binary pixel values, the binary pixel values having been formed with binary pixels with color filters by applying light,
- a computer program code section for forming an estimate of a color of said light by using a group of said binary pixel values and optimizing the estimation function, and
- a computer program code section for forming an output pixel value using said estimate.

Fig. 1a

Fig. 1b

Fig. 2a

Fig. 2b

Probability of
exposure of a single pixel

100%

P1(1,1)

50%

P1(2,1)

H₁  H₂

H

Logarithmic scale

Fig. 3a

Probability of
exposure of a single pixel

100%

P1(2,2)  R

P1(5,2)  G

50%

P1(5,5)  B

Wavelength

Fig. 3b

Fig. 4

Fig. 5

Fig. 6

CSU1

P1(m+0,n+0) →

P1(m+1,n+0) →

P1(m+2,n+0) →

P1(m+3,n+0) →

P1(m+4,n+0) →

$\cdot$

$\cdot$

P1(m+0,n+1) →

P1(m+1,n+1) →

$\cdot$

$\cdot$

$\cdot$

$\cdot$

P1(m+7,n+7) →

GRP(i,j)
8x8

Color Signal Unit

→ $S_R(i,j)$

→ $S_G(i,j)$

→ $S_B(i,j)$

P2(i,j)

E.g. 64 inputs

E.g. 3 outputs

PARA(i,j)

Fig. 7

24

P1(k,l)

F(k,l)

? ? ?

? ? ?

? ? ?

R

R

R

LB0

Fig. 8

P1(k,l)

F(k,l)

B G G

G R R

G R R

?

?

?

? ? ?

LB1

## Fig. 9

Fig. 10

Fig. 11

Fig. 12a

Fig. 12b

Fig. 13a

Fig. 13b

Fig. 13c

Fig. 14a

Fig. 14b

Fig. 14c

1530

Receive input
pixel values

1550

Optimize
estimation
function

1580

Form output
pixel values

Fig. 15

1610

Expose input
pixels

1620

Form input
pixel values
after color filter

1630

Receive input
pixel values

1640

Form
estimation
function

1650

Optimize
estimation
function

1680

Form output
pixel values

1690

Form output
image

Fig. 16